# EUROPÄISCHE PATENTSCHRIFT

(11) **EP 0 456 990 B1**
(45) Veröffentlichungstag und Bekanntmachung des Hinweises auf die Patenterteilung: **04.01.1995**
(21) Anmeldenummer: 91104206.7
(22) Anmeldetag: 19.03.1991
(51) Int. Cl.: G05F 1/59, G05F 1/563, G06F 1/26, G06F 1/30

(54) **Einrichtung zur Stromversorgung einer elektronischen Rechenanlage in einem Kraftfahrzeug**
Device to supply power to a computer system in a motor vehicle
Dispositif d'alimentation de puissance d'un système ordinateur dans un véhicule automobile

(30) Priorität: 12.05.1990 DE 4015351
(43) Veröffentlichungstag der Anmeldung: 21.11.1991
(73) Patentinhaber: DAIMLER-BENZ AKTIENGESELLSCHAFT, 70567 Stuttgart (DE)
(72) Erfinder: Kübler, Helmut, W-7151 Affalterbach (DE); Kübler, Friedrich, W-7030 Böblingen (DE)

(56) Entgegenhaltungen:
- EP-A- 0 316 781
- DE-A- 2 813 402
- DE-A- 3 542 765
- DE-C- 2 933 029
- GB-A- 2 068 607
- PATENT ABSTRACTS OF JAPAN vol. 5, no. 175 (P-88)(847) 11.November 1981 & JP-A-56 105 516 ( NIPPON DENKI K.K. ) 22. August 1981

## Beschreibung

Die Erfindung geht aus von einer Einrichtung zur Stromversorgung einer elektronischen Rechenanlage in einem Kraftfahrzeug nach der Gattung des Anspruchs 1.

Vielfältige Aufgabenstellungen der Steuerungstechnik in Kraftfahrzeugen verlangen vermehrt nach dem Einsatz von Rechenanlagen für Meß-, Regel- und Aufzeichnungszwecke. Auch soll Fahrgästen der Betrieb von Personalcomputern im Fahrzeug ermöglicht werden. Für entsprechende Geräte ist eine unterbrechungsfreie Stromversorgung zwingend notwendig, welche Bordnetzspannungseinbrüche etwa beim Starten der Brennkraftmaschine oder Spannungsspitzen bei Lastabwürfen von solchen Ausrüstungsmitteln zuverlässig fernhalten. Entsprechende Problemlösungen sahen bislang relativ großvolumige Schaltungen vor, die u.a. auch eine Zusatzbatterie zur Sicherstellung einer Startüberbrückungszeit umfaßten. Entsprechend hoch waren die Kosten entsprechender Einrichtungen, die im Falle der Verwendung einer Zusatzbatterie zudem nicht wartungsfrei waren.

Die DE 29 33 029 C2 beschreibt ein Netzteil, welches einen Schaltregler und einen linearen Regler umfaßt. Beide Regler beziehen Strom von derselben ungeregelten Gleichstromversorgung und sind mit ihren Ausgängen an einer gemeinsamen Ausgangsleitung angeschlossen. Dabei ist der Schaltregler über ein Filter mit besagter Ausgangsleitung verbunden, letztwelche über einen Speicherkondensator an einer gemeinsamen Erdungsleitung liegt. Oberhalb einer gewissen Schwellenbürde fungiert der Schaltregler, um Verluste zu begrenzen; bei nur kleiner Stromentnahme fungiert ausschließlich der Linearregler. Die Aktivierung des Schaltreglers erfolgt unabhängig von der ungeregelten Versorgungsspannung nach Maßgabe durch den Absolutwert der schon geregelten Ausgangsspannung an der Last, d. h. letztlich durch Auswertung deren Abfall bei ausreichend hoher Strombelastung gegenüber einem Referenzwert. Im Falle hoher versorgungsseitiger Spannungsspitzen werden die Regler durch letztere zerstört.

Aus der DE-PS 38 37 071 ist ein Stromversorgungssystem bekannt, in dem mindestens zwei Netzteile ausgangsseitig parallelgeschaltet sind, um gemeinsam eine Last zu speisen. Dabei wird die Ausgangsleistung des jeweiligen Netzteils von seiner Temperatur geregelt.

Verwandte Lösungen wurden in der Fachzeitschrift Electronic Design 14, November 1985, S. 125-132 beschrieben. Sie sollen eine zuverlässige Betriebsmöglichkeit bis an die thermische Überlastungsgrenze jedes einzelnen einer Mehrzahl von parallel wirkenden Stromversorgungsmodulen schaffen.

Demgegenüber ist es Aufgabe der Erfindung, eine Einrichtung zur Stromversorgung einer elektronischen Rechenanlage in einem Kraftfahrzeug zu schaffen, welche eine ordnungsgemäße Stromversorgung innerhalb eines sehr weiten Eingangsspannungsbereichs und ohne Verwendung von Zusatzbatterien gewährleistet und darüberhinaus angeschlossene Verbraucher vor Überspannungen schützt.

Diese Aufgabe wird bei einer gattungsgemäßen Einrichtung mit dem Kennzeichen des Anspruchs 1 gelöst.

Sie weist den Vorteil auf, in einem Kraftfahrzeug eine zuverlässige Dauerversorgung einer Rechenanlage in einem weiten Schwankungsbereich der Bordnetzspannung zwischen etwa 40% und 300% ihres Nominalwertes zu ermöglichen, und zwar auf kostengünstige Weise und bei jedenfalls gutem Wirkungsgrad, und ohne Erfordernis einer separaten Stützbatterie.

Weitere Vorteile werden durch Fortbildung gemäß der Lehre der rückbezogenen Ansprüche 2 bis 7 erschlossen. In vorteilhafter Weise erlaubt eine entsprechend weitergebildete Einrichtung u.a. auch eine einfache Prüfabfrage der einzelnen Komponenten und ihrer ordnungsgemäßen Funktion.

Ein Ausführungsbeispiel der Erfindung ist in der Zeichnung dargestellt und in der nachfolgenden Beschreibung erläutert. Es zeigen:
- Figur 1: das Blockschaltbild einer erfindungsgemäßen Einrichtung;
- Figur 2: eine Tabelle der in Statussignale umgesetzten Ansteuerzustände einzelner Funktionsmodule in Abhängigkeit von der Eingangsspannung der Einrichtung.

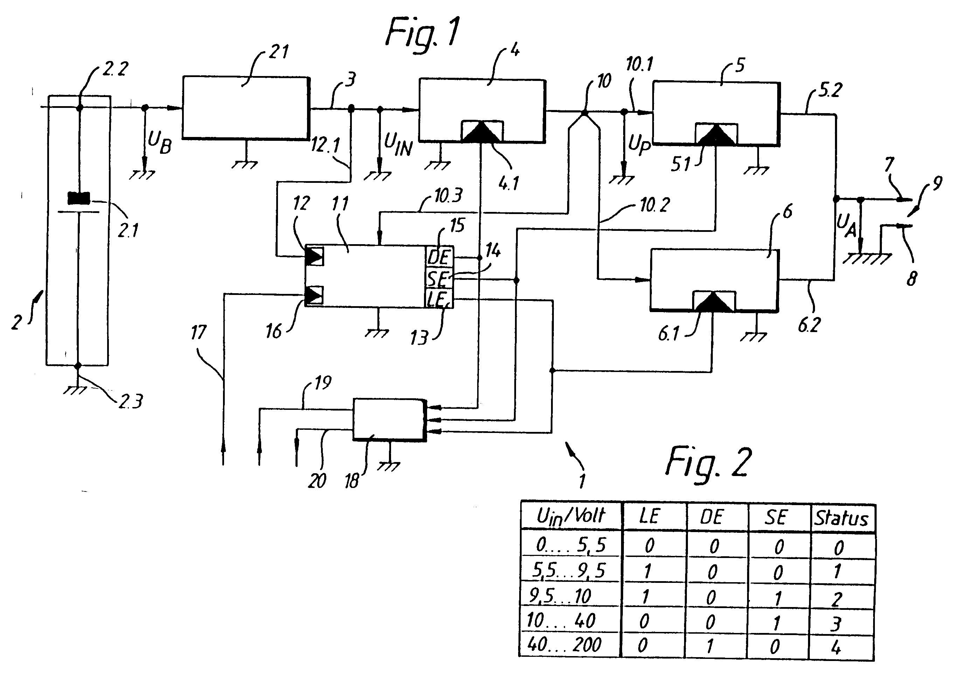

Gemäß Figur 1 umfaßt die erfindungsgemäße Einrichtung 1 eine Schutzeinrichtung 4 zur fremdgesteuerten Freischaltung nachgeordneter Verbraucher, einen Spannungsüberwachungsschaltkreis 11, sowie einen Schalt-Regler 5 und einen Linear-Regler 6. Die Ausgänge 5.2 und 6.2. besagter Regler wirken auf eine gemeinsame Ausgangsklemme 7, an der gegenüber einer Ausgangsmasseklemme 8 die Ausgangsspannung U_{A} des Versorgungsanschlusses 9 zur Verfügung steht. Die Einrichtung umfaßt optional noch wenigstens ein vorgeschaltetes Störschutzfilter 21 oder/und eine Anordnung 18 zu Statusabfragezwecken.

Dabei wird die Einrichtung 1 aus einem Bordnetz 2, das z.B. eine Batterie 2.1 mit Netzklemme 2.2 und Masseklemme 2.3 und einen nicht gezeigten Generator umfaßt, mit der Bordnetzspannung U_{B} versorgt; ein entsprechender Versorgungspfad 3 ist vorzugsweise durch das Störungsunterdrückungsfilter 21 geführt. Die so ggfs. störgesiebte Eingangsspannung U_{IN} gelangt an die Schutzeinrichtung 4, und über eine Abtastleitung 12.1 zu einem Abtasteingang 12 besagten Spannungsüberwachungsschaltkreises 11, der seine Betriebsleistung über eine Speiseleitung 10.3 von einem Versorgungsknoten 10 aus bezieht, in den die Schutzeinrichtung 4 ausgangsseitig eine gegen Überspannung geschützte Versorgungsspannung U_{P} einspeist. Über entsprechende Speiseleitungen 10.1 und 10.2 werden der Schalt-Regler 5 und der Linear-Regler 6 mit der geschützten Versorgungsspannung U_{P} vom Knoten 10 aus versorgt. Aktivierungseingänge 4.1, 5.1 und 6.1 der Schutzeinrichtung 4 bzw. des Schalt-Reglers 5 bzw. des Linear-Reglers 6 sind mit entsprechenden Ausgängen 13 (DE für Load-Dump-Enable), 14 (SE für Switch Mode Enable) und 15 (LE für Linear Mode Enable) des Spannungsüberwachungsschaltkreises 11 verbunden.

Dieselben Ausgänge können optional auch noch an eine Anordnung 18 zur Statuscodierung und -abfrage geführt sein, die durch wenigstens eine Kontrolleitung 19 ansprechbar und durch eine Ausleseleitung 20 abfragbar ist. Der Spannungsüberwachungsschaltkreis 11 verfügt vorzugsweise noch über einen Eingang 16, dem ein logisches Schaltsignal zuführbar ist.

Die Funktion der Einrichtung wird nun anhand der Tabelle gemäß Figur 2 für einen beispielhaften Anwendungsfall mit einer Soll-Ausgangsspannung U_{A} von 5 Volt beschrieben.

Gilt für die Eingangsspannung 0 < U_{IN} < 5,5 Volt, liegen die DE-, SE- und LE-Ausgänge 13 bis 15 alle auf einheitlichem logischem Potential, angenommenerweise z.B. auf Null-Potential. Dies wird z.B. gewährleistet durch meßtechnische Auswertung der Momentanspannung U_{IN} < 5,5 Volt am Eingang 12 und/oder aufgrund eines gewissen Mindestwertes der dem Spannungsüberwachungsschaltkreis 11 zuzuführenden Betriebsspannung U_{P}. Beispielsweise ist der Spannungsüberwachungsschaltkreis 11 so beschaffen, daß er zumindest in einem bestimmten Bereich einer anliegenden Betriebsspannung 0 < U_{P} < 5,5 Volt an besagten Ausgängen jedenfalls (auch dann) logische Null-Pegel abgibt, wenn eine Messung mangels ausreichender Betriebsspannung noch gar nicht möglich ist. Der Spannungsüberwachungsschaltkreis 11 umfaßt im übrigen eigene Begrenzungs- bzw. Stabilisierungsmittel zur Gewinnung einer intern stabilisierten Betriebsspannung aus einer dafür jeweils ausreichenden Speisespannung U_{P}.

Nach Anregung durch wenigstens ein Abfragesignal auf der Leitung 19 gibt die optional zusätzlich vorgesehene Anordnung 18 im Eingangsspannungsbereich 0 < U_{IN} < 5,5 Volt, auf der Leitung 20 beispielsweise den Statuswert "0" ab.

Erkennt der Spannungsüberwachungsschaltkreis 11 eine Eingangsspannung 5,5 Volt < U_{IN} < 10 Volt, wird der LE-Ausgang 13 und damit über den Eingang 6.1 der Linear-Regler 6 aktiviert. Diesem Zustand ordnet die Anordnung 18 den Statuswert "1" zu.

Bei einer Soll-Ausgangsspannung U_{A} = 5,0 Volt und einem Eingangsspannungsbereich von 5,5 bis 10 Volt liefert eine lineare Reglerstruktur einen brauchbaren Wirkungsgrad, im Gegensatz zu einem Schaltregler, falls dieser für den Bereich der nominalen bis dreifachen Bordnetzspannung wirkungsgradmäßig optimiert sein soll, wie es hier erfindungsgemäß zugrundegelegt ist. Die Abschaltung des linearen Reglers 6 ab einer Eingangsspannung von 10 Volt begrenzt insoweit auch dessen Verlustwärmeanfall, der über Kühlflächen abzuführen ist, die aus Platz- und Kostengründen möglichst klein ausfallen sollen.

Erkennt der Spannungsüberwachungsschaltkreis 11 eine Eingangsspannung 9,5 Volt < U_{IN} < 40 Volt, wird der SE-Ausgang 14 und damit über den Eingang 5.1 der Schalt-Regler 5 aktiviert.

Dem ordnet die Anordnung 18 im überlappenden Eingangsspannungsbereich 9,5 < U_{IN} < 10 Volt den Statuswert "2", und im angrenzenden Eingangsspannungsbereich 10 Volt < U_{IN} < 40 Volt den Statuswert "3" zu.

Erkennt der Spannungsüberwachungsschaltkreis 11 z.B. eine Eingangsspannung U_{IN} > 40 Volt, werden die DE- und SE-Ausgänge 13 und 14 auf logisches Null-Potential gesetzt und der DE-Ausgang 15 und somit über den Eingang 4.1 die Schutzeinrichtung 4 aktiviert, um den Versorgungsknoten 10 - zumindest für eine gewisse Mindestdauer - von der Eingangsspannung U_{IN} auf der Leitung 3 im Sinne einer Trennung freizuschalten. Die Regler 5 und 6 können kapazitive Speichermittel beinhalten, die während der Dauer eines Load-Dump-Zustandes von bis zu 300 ms eine Stromabgabe vom Ausgang 9 an einen nachfolgenden Verbraucher überbrückend gewährleisten.

Die LE-, SE- und DE-Ausgänge 13 bis 15 können durch ein Schaltsignal am Eingang 16 des Spannungsüberwachungsschaltkreises 11 entweder alle auf logischen Null-Pegel gesetzt werden, oder es können dadurch nur die LE und SE-Ausgänge 13 und 14 auf logischen Null-Pegel und der DE-Ausgang 15 auf logischen Aktivpegel gesetzt werden. Auf diese Weise kann die Stromversorgung über die Leitung 17 ferngesteuert an- und abgeschaltet werden. Eine besondere ausgangsseitige Entkopplung der beiden Regler 5 und 6 kann durch entsprechende Gestaltung der Ausgangskreise dieser Regler verzichtbar oder aber nichtdargestellterweise in Form wenigstens eines besonderen, zusätzlichen Kopplungselements vorgesehen sein.

Das erfindungsgemäß optionale Störschutzfilter 21 dient der Abfilterung sehr schneller Überspannungsspitzen und hochfrequenter Störüberlagerungen jeder Art auf der Bordgleichspannung U_{B}. Dadurch kann die erforderliche Meß- oder Abtastbandbreite des Einganges 12 des Spannungsüberwachungsschaltkreises 11 in praktikablen Grenzen gehalten werden, um Fehlauslösungen der Schutzeinrichtung 4 schon durch sehr kurze Störspitzen zu vermeiden. Hierfür weist das Störschutzfilter wenigstens eine ausgeprägte Tiefpaßfunktion auf.

Die erfindungsgemäß optional vorgesehene Anordnung 4 zur Statusabfrage der verschiedenen möglichen Betriebszustände erlaubt einen einfachen Einbezug der Einrichtung in eine automatische Selbsttest- bzw. Fehlerortungsroutine durch einen zentralen Überwachungsrechner im Kraftfahrzeug.

Es versteht sich von selbst, daß die Einrichtung sinngemäß auch für andere Spannungsgrenzen für die Aktivierung bzw. Disaktivierung der Regler 5 und 6 und der Schutzeinrichtung 4 ausgelegt werden kann, je nach Höhe der nominalen Bordnetz- und gewünschten Ausgangsspannung.

Die erfindungsgemäße Einrichtung kann herkömmliche Stromversorgungen mit einer besonderen Batterie vollkommen ersetzen. Sie beansprucht dank eines günstigen Wirkungsgrades über einen weiten Eingangsspannungsbereich nur verhältnismäßig wenig Kühlmittel und deshalb wenig Raum und erweist sich insoweit auch als fertigungsfreundlich und kostengünstig.

## Patentansprüche

1. Einrichtung zur Stromversorgung einer elektronischen Rechenanlage in einem Kraftfahrzeug, mit zwei voneinander unabhängig betreibbaren, sowohl eingangs- als auch ausgangsseitig parallel wirkenden Spannungsreglern, in welchen die Soll-Ausgangsspannung von der Eingangsspannung (nominale Bordnetzspannung) abgeregelt wird und wobei der erste Regler als Linearregler und der zweite Regler als Schaltregler ausgeführt ist,
**dadurch gekennzeichnet**,
- daß die beiden Regler bezüglich ihrer parallel wirkenden Eingänge wenigstens ein kapazitives Speichermittel mitumfassen und über eine besondere Schutzeinrichtung (4) mit Abtrennfunktion mit der Eingangsspannung (U_{IN}) beaufschlagbar sind;
- daß ein die vom Bordnetz abzuregelnde Eingangsspannung (U_{IN}) erfassender und auswertender Spannungsüberwachungsschaltkreis (11) vorgesehen ist mit je einem Ausgang (13, 14, 15) zur spannungsbereichsweise individuellen Aktivierungsansteuerung besagter zwei Regler (5, 6) und besagter Schutzeinrichtung (4);
- daß der Spannungsüberwachungsschaltkreis (11) so ausgelegt ist, daß er in Abhängigkeit vom Auswertungsergebnis der abzuregelnden Eingangsspannung (U_{IN}) leistet:
- keinerlei Aktivierung im Eingangsspannungsbereich Null bis zu einem ersten Grenzwert;
- Aktivierung (LE) des Linearreglers (6) im Eingangsspannungsbereich zwischen besagtem ersten und einem zweiten Grenzwert und sonst nicht;
- Aktivierung (SE) des Schaltreglers (5) im Eingangsspannungsbereich zwischen einem dritten und einem vierten Grenzwert, wobei der dritte Grenzwert unterhalb und der vierte Grenzwert oberhalb des zweiten Grenzwertes liegt, und sonst nicht;
- Aktivierung (DE) der Schutzeinrichtung (4) oberhalb des vierten Grenzwertes im Sinne einer Abtrennung besagter Regler (5, 6) von der abzuregelnden Eingangsspannung (U_{IN}).

2. Einrichtung nach Anspruch 1,
**dadurch gekennzeichnet**,
- daß für eine nominale Bordnetzspannung (U_{B}) von 14 Volt und eine abzuregelnde Ausgangsspannung (U_{A}) von 5 Volt der erste Grenzwert bei 5,5 Volt, der zweite Grenzwert bei 10 Volt, der dritte Grenzwert bei 9,5 Volt, und der vierte Grenzwert oberhalb 30 Volt liegt.

3. Einrichtung nach Anspruch 1,
**dadurch gekennzeichnet**,
- daß besagter Schutzeinrichtung (4) und dem die abzuregelnde Eingangsspannung (U_{IN}) erfassenden Spannungsüberwachungsschaltkreis (11) ein Filter (21) zur Unterdrückung hochfrequenter Störsignale vorgeschaltet ist.

4. Einrichtung nach Anspruch 3,
**dadurch gekennzeichnet**,
- daß die Grenzfrequenz der Erfassung und Auswertung der abzuregelnden Eingangsspannung im Spannungsüberwachungsschaltkreis (11) auf die Grenzfrequenz des Filters (21) abgestimmt ist.

5. Einrichtung nach Anspruch 1,
**dadurch gekennzeichnet**,
- daß sie weiter eine Anordnung zur Statusabfrage (18) umfaßt, welche eingangsseitig mit den Ausgängen (13, 14, 15) des Spannungsüberwachungsschaltkreises (11) verbunden ist und über wenigstens einen Ausgang (20) das Auslesen eines den jeweiligen Ansteuerzustand codierenden Signals erlaubt.

6. Einrichtung nach Anspruch 1,
**dadurch gekennzeichnet**,
- daß der Spannungsüberwachungsschaltkreis einen weiteren Eingang (16) aufweist, welchem ein logisches Signal zum vorrangigen Setzen aller Ausgänge (13, 14, 15) auf jeweils nichtaktivierenden Pegel zuführbar ist.

7. Einrichtung nach Anspruch 1,
**dadurch gekennzeichnet**,
- daß der Spannungsüberwachungsschaltkreis einen weiteren Eingang (16) aufweist, welchem ein logisches Signal zum gleichzeitig vorrangigen Setzen der LE- und SE-Ausgänge (13, 14) auf nichtaktivierenden und des DE-Ausganges (15) auf aktivierenden Pegel zuführbar ist.

## Claims

1. Device for supplying power to an electronic computer in a motor vehicle, comprising two voltage regulators, which can be operated independently of one another and act in parallel both on the input side and on the output side, and in which the desired output voltage is regulated downwards from the input voltage (nominal vehicle network voltage), and the first regulator being embodied as a linear regulator and the second regulator as a switched-mode regulator, characterised in that
- the two regulators also comprise at least one capacitive storage means with respect to their parallel-acting inputs, and can have the input voltage (U_{IN}) applied to them via a special protective device (4) having a disconnecting function;
- a voltage monitoring circuit (11) is provided which detects and evaluates the input voltage (U_{IN}) to be regulated downwards from the vehicle network and comprises one output (13, 14, 15) each for individually controlling activation, voltage range by voltage range, of said two regulators (5, 6) and said protective device (4);
- the voltage monitoring circuit (11) is designed such that it performs, as a function of the evaluation result of the input voltage (U_{IN}) to be regulated downwards:
- no activation in the input voltage range from zero up to a first limit;
- activation (LE) of the linear regulator (6) in the input voltage range exclusively between said first and a second limit;
- activation (SE) of the switched-mode regulator (5) in the input voltage range exclusively between a third and a fourth limit, the third limit being below and the fourth limit above the second limit;
- activation (DE) of the protective device (4) above the fourth limit for the purpose of disconnecting said regulators (5, 6) from the input voltage (U_{IN}) to be regulated downwards.

2. Device according to Claim 1, characterised in that
- for a nominal vehicle network voltage (U_{B}) of 14 volts and an output voltage (U_{A}), to be regulated downwards, of 5 volts, the first limit is 5.5 volts, the second limit is 10 volts, the third limit is 9.5 volts, and the fourth limit is above 30 volts.

3. Device according to Claim 1, characterised in that
- a filter (21) for suppressing high-frequency interference signals is connected upstream of said protective device (4) and the voltage monitoring circuit (11) detecting the input voltage (U_{IN}) to be regulated downwards.

4. Device according to Claim 3, characterised in that
- the threshold frequency for detecting and evaluating the input voltage to be regulated downwards in the voltage monitoring circuit (11) is tuned to the threshold frequency of the filter (21).

5. Device according to Claim 1, characterised in that
- it further comprises an arrangement for status interrogation (18), which is connected on the input side to the outputs (13, 14, 15) of the voltage monitoring circuit (11), and permits via at least one output (20) readout of a signal encoding the respective control state.

6. Device according to Claim 1, characterised in that
- the voltage monitoring circuit has a further input (16), to which a logic signal can be fed for the priority setting of all outputs (13, 14, 15) to the respective non-activating level.

7. Device according to Claim 1, characterised in that
- the voltage monitoring circuit has a further input (16), to which a logic signal can be fed for the simultaneous priority setting of the LE and SE outputs (13, 14) to the non-activating level, and the DE output (15) to the activating level.

## Revendications

1. Dispositif pour l'alimentation en courant d'une installation de calcul électronique incorporée dans un véhicule automobile, comprenant deux régulateurs de tension pouvant être attaqués indépendamment l'un de l'autre et agissant en parallèle côté entrée et côté sortie, dans lesquels la tension de consigne de sortie est réglée sur la base de la tension d'entrée (tension nominale du réseau de bord), le premier régulateur étant constitué par un régulateur linéaire et le deuxième régulateur par un régulateur par tout ou rien,
caractérisé
- en ce que les deux régulateurs comprennent en commun au moins un moyen de mémoire capacitif à leurs entrées agissant en parallèle et peuvent recevoir la tension d'entrée (U_{IN}) à travers un dispositif de protection particulier (4) à fonction de coupure ;
- en ce qu'il est prévu un circuit (11) de surveillance de la tension qui capte et analyse la tension d'entrée (U_{IN}) à régler issue du réseau de bord, muni de sorties respectives (13, 14, 15) pour le pilotage individuel de l'activation par intervalles de tension, des deux régulateurs (5, 6) et dudit dispositif de protection (4) ;
- en ce que le circuit (11) de surveillance de la tension est construit de manière à assurer, en fonction du résultat d'analyse de la tension d'entrée à régler (U_{IN}) :
- aucune activation dans l'intervalle de valeurs de la tension d'entrée allant de zéro à une première limite ;
- activation (LE) du régulateur linéaire (6) dans l'intervalle de valeurs de la tension d'entrée compris entre ladite première limite et une deuxième limite et rien par ailleurs ;
- activation (SE) du régulateur par tout ou rien (5) dans l'intervalle de valeurs de la tension d'entrée compris entre une troisième limite et une quatrième limite, la troisième limite étant inférieure à la deuxième limite et la quatrième limite étant supérieure à la deuxième limite, et rien par ailleurs ;
- activation (DE) du dispositif de protection (4) au-dessus de la quatrième limite, pour assurer la coupure entre lesdits régulateurs (5, 6) de la tension d'entrée (U_{IN}) à régler.

2. Dispositif selon la revendication 1,
caractérisé
- en ce que, pour une tension nominale (U_{B}) du réseau de bord de 14 volts, et une tension de sortie à régler (U_{A}) de 5 volts, la première limite est de 5,5 volts, la deuxième limite de 10 volts, la troisième limite de 9,5 volts et la quatrième limite supérieure à 30 volts.

3. Dispositif selon la revendication 1,
caractérisé
- en ce qu'un filtre (21) servant à supprimer les signaux parasites à haute fréquence est intercalé en amont dudit dispositif de protection (4) et le circuit de surveillance de la tension qui capte la tension d'entrée à régler (U_{IN}) .

4. Dispositif selon la revendication 3,
caractérisé
- en ce que la fréquence limite d' acquisition et d'exploitation de la tension d'entrée à régler dans le circuit (11) de surveillance de la tension est accordée sur la fréquence limite du filtre (21).

5. Dispositif selon la revendication 1,
caractérisé
- en ce qu'il comprend en outre un dispositif pour l'interrogation de l'état (18), qui est connecté côté entrée aux sorties (13, 14, 15) du circuit (11) de surveillance de la tension et permet, à travers au moins une sortie (20) la lecture d'un signal qui code l'état de pilotage considéré.

6. Dispositif selon la revendication 1,
caractérisé
- en ce que le circuit de surveillance de la tension présente une autre entrée (16) à laquelle peut être envoyé un signal logique pour le classement de la priorité de toutes les sorties (13, 14, 15) sur leur niveau non activant respectif.

7. Dispositif selon la revendication 1,
caractérisé
- en ce que le circuit de surveillance de la tension présente une autre entrée (16) à laquelle peut être envoyé un signal logique servant au classement simultané de la priorité des sorties LE et SE (13, 14) sur le niveau non activant et de la sortie DE (15) sur le niveau activant.
